# EUROPEAN PATENT APPLICATION

(11) **EP 1 619 800 A1**
(43) Date of publication of application: **25.01.2006**
(21) Application number: 05254083.8
(22) Date of filing: 29.06.2005
(51) Int. Cl.: H03M 13/00, H04L 27/26, H04L 1/04, H04L 1/06

(54) **Method and apparatus for space interleaved communication in a multiple antenna communication system**

(30) Priority: 22.07.2004 US 896759
(71) Applicant: Agere Systems, Inc., Allentown, PA 18109 (US)
(72) Inventor: Driesen, Bas, 5102 EC Dongen (NL); Van Zelst, Allert, 3448 TL Woerden (NL)
(74) Representative: Williams, David John

(57) **Abstract**

Methods and systems are disclosed for space interleaved communication of data in a multiple antenna communication system. Data is interleaved over space by interleaving the data over a plurality of transmit branches in the multiple antenna system. The disclosed spatial interleaving increases the performance gains resulting from the spatial transmit diversity of the multiple antenna communication system. Spatial interleaving can be performed, for example, over the bits before the bits are interleaved over frequency. In another variation, spatial interleaving is performed over the symbols after the bits are mapped to symbols.

## Description

### Field of the Invention

The present invention relates generally to multiple antenna communication systems, and more particularly, to methods and apparatus for interleaving data in a Multiple Input Multiple Output Orthogonal Frequency Division Multiplexing (MIMO-OFDM) system.

### Background of the Invention

A MIMO-OFDM system increases the data bandwidth of a traditional OFDM system by transmitting separate data streams on multiple transmit antennas. Each receiver in the system receives a combination of these data streams, thereby increasing the achievable throughput. A well known MIMO-OFDM transmit scheme is called the joint encoding (JC) MIMO-OFDM transmit scheme, since the encoder jointly encodes data over all the transmit branches. In other words, the encoding is performed before the data is split over the multiple transmit branches. For a discussion of an exemplary joint encoding MIMO-OFDM transmission scheme, see, for example, Xiaodong Li et al., "Effect of Iterative Detection and Decoding on the Performance of BLAST," Proc. of the IEEE Global Telecommunications Conference (GLOBECOM) 2000, vol. 2, 1061-1066 (2000). In the disclosed joint encoding architecture, the incoming binary data is scrambled in order to randomize the binary data, and the scrambled binary data is encoded. The encoded data is then demultiplexed over the multiple transmit branches. The joint encoding MIMO-OFDM transmission scheme requires the encoder and decoder to operate at a multiple of the speed of a traditional IEEE 11a/g system.

In another exemplary MIMO-OFDM system, separate encoders are placed in each transmit branch after the data is demultiplexed. This technique is referred to as per antenna coding (PAC). See, A. van Zelst, "Per-Antenna-Coded Schemes for MIMO OFDM", Proc. of the IEEE International Conference on Communications (ICC) 2003, vol. 4, 2832-2836 (May, 2003), incorporated by reference herein. Per antenna coding does not require the encoder and decoder to operate at a multiple of the speed of a traditional IEEE 11a/g system. Rather, multiple single speed decoders can be used. In addition, the error correcting capability of the encoder and decoder do not need to be shared across multiple transmit branches and, therefore, the performance of the error correction does not decrease with an increasing number of transmit branches.

When convolutional encoding is performed, the MIMO-OFDM system can be scaled back to a simple single transmit branch system (compliant with the IEEE 11a/g standard), without the need for a different encoder and, more importantly, without the need for a different decoder at the receiver. An advantage of joint convolutional encoding is that the code uses spatial diversity (achieved when multiple transmit branches are used) in an optimal way. While per antenna coding techniques sustain the error correcting capabilities per branch and inherently improve the performance of multiple antenna communication systems with respect to the joint coding, a number of performance issues remain, related to spatial diversity. A need therefore exists for methods and systems that increase the performance gains resulting from the spatial transmit diversity of the MIMO-OFDM system.

### Summary of the Invention

Generally, methods and systems are disclosed for space interleaved communication of data in a multiple antenna communication system. Data is interleaved over space by interleaving the data, such as bits or symbols, over a plurality of transmit branches in the multiple antenna system. The disclosed spatial interleaving increases the performance gains resulting from the spatial transmit diversity of the multiple antenna communication system. In one exemplary embodiment, spatial interleaving is performed over the bits before the bits are interleaved over frequency. In another exemplary embodiment, spatial interleaving is performed over the symbols after the bits are mapped to symbols.

A more complete understanding of the present invention, as well as further features and advantages of the present invention, will be obtained by reference to the following detailed description and drawings.

### Brief Description of the Drawings

FIG. 1 is a schematic block diagram of an exemplary conventional MIMO-OFDM system;
FIG. 2 is a schematic block diagram of an exemplary conventional joint coding MIMO-OFDM transmit system;
FIG. 3 is a schematic block diagram of an exemplary MIMO-OFDM transmit system incorporating the features of the present invention for providing spatial interleaving over bits;
FIG. 4 is a schematic block diagram of an alternative embodiment of the present invention for providing spatial interleaving over symbols; and
FIGS. 5A and 5B illustrate a suitable exemplary technique for performing spatial interleaving.

### Detailed Description

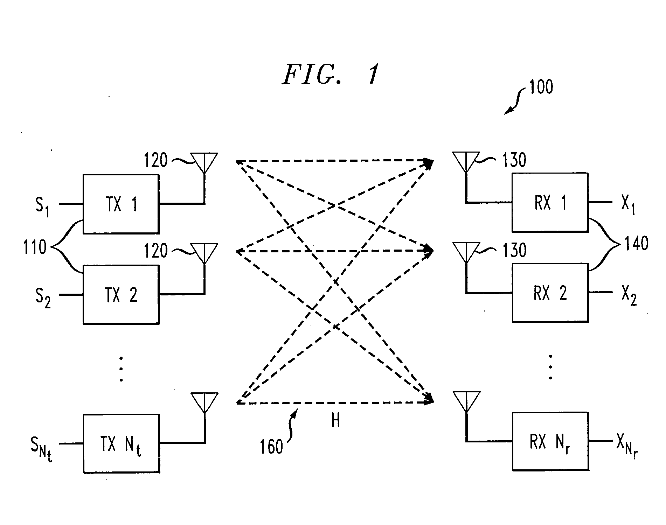

FIG. 1 is a schematic block diagram of an exemplary conventional MIMO-OFDM system 100. The system comprises a number of transmitters 110, transmit antennas 120, receive antennas 130, and receivers 140. Source signals S₁ to S_{Nt} are encoded, modulated, and transmitted by the associated transmitter 110 over the channel matrix 160. Each receiver 130 is capable of receiving a combination of the transmitted data streams on the receive antennas 130, thereby increasing the achievable throughput.

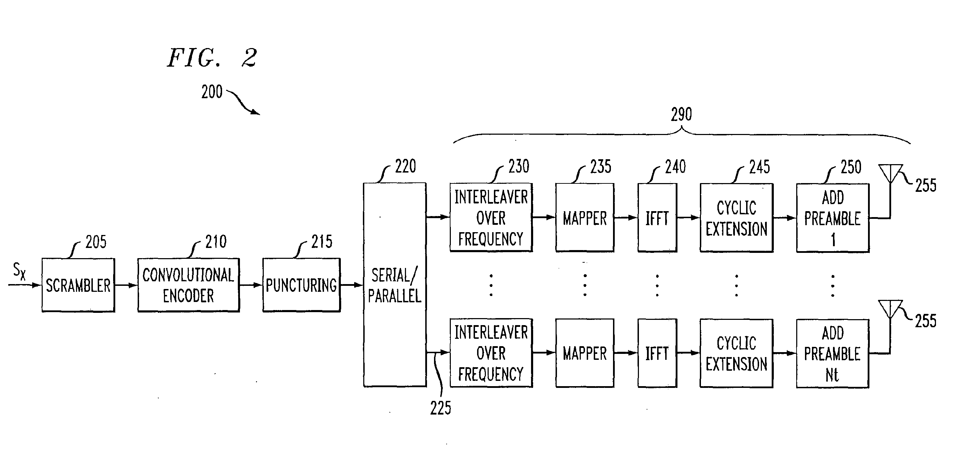

FIG. 2 is a schematic block diagram of an exemplary conventional joint coding MIMO-OFDM transmit system 200. The system 200 features a single convolution encoder 210 operating at a speed equal to the sum of the data rates of the transmit branches 290. The scrambler 205 scrambles the source data Sₓ to create a random data pattern. The convolutional encoder 210 performs a Viterbi encoding compliant with the IEEE 802.11 a/g standard. For a detailed description of convolutional encoding, see, for example, Shu Lin, Daniel J. Costello Jr, "Error Control Coding: Fundamentals and Applications." The data rate at the output of the encoder is twice the rate of the input signal to the encoder 210. If a data rate different from that of the encoder 210 is desired, the encoded data may be optionally punctured (block 215) to null (eliminate) redundant bits in the data stream. While eliminating the redundant bits creates errors in the data stream, the errors can be corrected by the receiver 140.

The punctured data is demultiplexed (serial-to-parallel converter 220) to create the individual data streams 225 associated with each transmit branch 290. Each data stream 225 is then interleaved over frequency (block 230) to randomize the data. The interleaved data is then mapped to QAM symbols by mappers 235, and transformed to the time-domain by IFFT 240. A cyclic extender 245 then appends a cyclic extension to provide for multipath robustness at the receiver 140. Preambles are also periodically inserted into each data stream (block 250) to provide for synchronization of the data at the receiver 140, and transmitted via transmit antenna 255. Each receiver 140 is architecturally the inverse of the transmitter system 200.

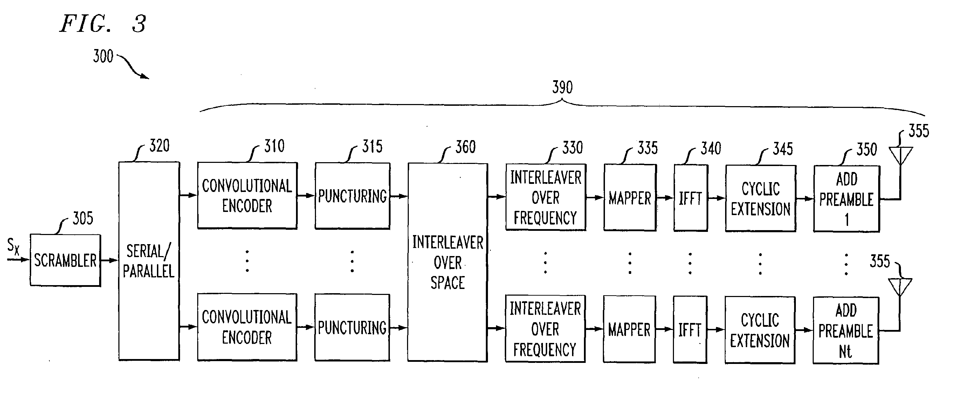

FIG. 3 is a schematic block diagram of an exemplary MIMO-OFDM transmit system 300 incorporating the features of the present invention for providing spatial interleaving over bits. In FIG. 3, blocks 305 through 355 perform similar functions to the corresponding blocks in FIG. 2. In this embodiment, however, the demultiplexing (serial-to-parallel conversion) 320 is performed before the convolutional encoding 310. A separate convolution encoder 310 and puncturer 315 are therefore dedicated to each transmit branch 390. Since this reduces the performance requirement of the encoder 310 and decoder (not shown), the implementation of both devices is simplified. In addition, the error correcting capability of the code does not need to be shared across multiple transmit branches 390 and, therefore, the performance of the error correcting code will not decrease as the number of transmit branches 390 increases. In addition, the MIMO-OFDM system 300 of FIG. 3 still has the advantage of being able to be easily scaled back to a simple single transmit branch system compliant with the IEEE 802.11 a/g standard.

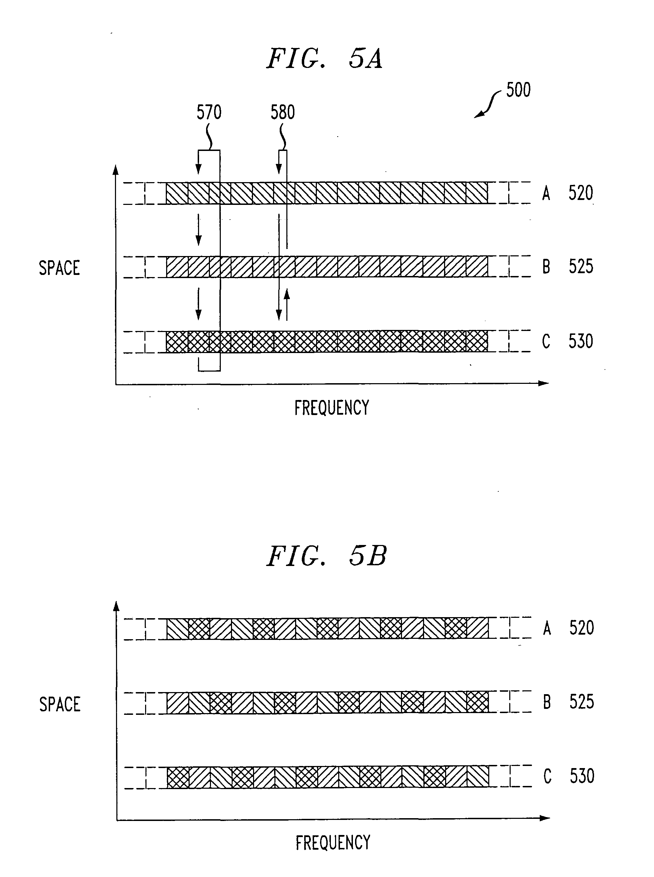

In the MIMO-OFDM system 300 of FIG. 3, an interleaving over space 360 is performed prior to the interleaving over frequency 330. In this case, the interleaving over space 360 is performed over bits in a round robin fashion, as will be described in more detail in conjunction with FIG. 5. The performance of interleaving over bits is superior to interleaving over symbols, although both interleaving over space techniques provide improved performance in comparison to a system without such interleaving.

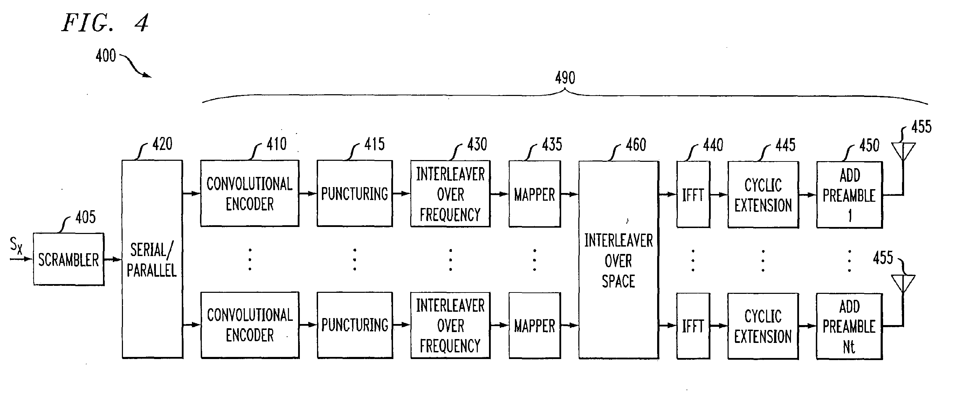

FIG. 4 is a schematic block diagram of an alternative embodiment of the MIMO-OFDM transmit system 300 of FIG. 3 incorporating the features of the present invention for providing spatial interleaving over symbols. In FIG. 4, blocks 405 through 460 perform similar functions to the corresponding blocks in FIGS. 2 and 3. In this alternative embodiment, however, the interleaver over space 460 is placed after the interleaver over frequency 430 in the transmit branch 490. The interleaving over space 460 is performed over symbols in order to prevent any negative impact on the results of the interleaving over frequency 430. The interleaving over space 460 is also performed in a round robin fashion, as will be described in more detail in conjunction with FIG. 5, although other techniques are possible provided there is no negative impact on the interleaving over frequency 430.

It should be noted that, in the transmit systems 300, 400, the scrambler 305, 405 was placed before the demultiplexer 320, 420 in the transmit branches 390, 490. The scrambler 305, 405 may, alternatively, be placed before or after the demultiplexer 320, 420 in every transmit branch 390, 490 separately (depending on the design of the scrambler 305, 405). In this case, however, each transmit branch 390, 490 would require a scrambler intialization sequence.

FIGS. 5A and 5B illustrate a suitable exemplary technique 500 for performing spatial interleaving over three transmit antennas. FIG. 5A represents the bits or symbols prior to interleaving and FIG. 5B represents the bits or symbols after interleaving over space. In FIGS. 5A and 5B, each chain of bits or symbols 520, 525, 530 represents the data associated with a transmit branch 390, 490. During the first interleaving operation 570, the bit or symbol from transmit branch A 520 is transferred to transmit branch B 525, the bit or symbol from transmit branch B 525 is transferred to transmit branch C 530, and the bit or symbol from transmit branch C 530 is transferred to transmit branch A 520. During the second interleaving operation 580, the bit or symbol from transmit branch A 520 is transferred to transmit branch C 530, the bit or symbol from transmit branch C 530 is transferred to transmit branch B 525, and the bit or symbol from transmit branch B 525 is transferred to transmit branch A 520. The results of these operations 570, 580 are shown in FIG. 5B. In other embodiments of the interleaver over space 360, 460, the interleaving operation 570, 580 may be performed over every bit or symbol, or over every nth bit or symbol. In one aspect of the invention, during the spatial interleaving operation, a chain of bits or symbols associated with a frequency band of one transmit branch are moved to the same frequency band of a different transmit branch. For instance, during the spatial interleaving operation, the chain of bits or symbols being moved from branch A 520 to branch B 525 are associated with the same frequency band in branch A 520 and branch B 525.

It is to be understood that the embodiments and variations shown and described herein are merely illustrative of the principles of this invention and that various modifications may be implemented by those skilled in the art without departing from the scope and spirit of the invention.

## Claims

1. A transmitter for a multiple antenna communication system, comprising:
a plurality of transmit branches; and
an interleaver over space, wherein said interleaver over space interleaves data over two or more of said transmit branches.

2. The transmitter of claim 1, wherein said interleaver over space performs spatial interleaving over bits or over symbols.

3. The transmitter of claim 1, wherein said interleaver over space spatially interleaves data using a round robin technique.

4. The transmitter of claim 1, wherein said interleaver over space is positioned in a transmit branch before or after an interleaver over frequency.

5. A method of transmitting data in a multiple antenna communication system, comprising the steps of:
interleaving data over space between two or more transmit branches; and
transmitting said interleaved data over said two or more transmit branches.

6. The method of claim 5, wherein said step of interleaving data over space performs spatial interleaving over bits or over symbols.

7. The method of claim 5, wherein said step of interleaving data over space spatially interleaves data using a round robin technique.

8. The method of claim 5, wherein said step of interleaving data over space is performed before or after a step of interleaving over frequency.

9. A receiver for a multiple antenna communication system, comprising:
a plurality of receive branches; and
a deinterleaver over space, wherein said deinterleaver over space deinterleaves data over two or more of said receive branches.

10. A method of receiving data in a multiple antenna communication system, comprising the steps of:
receiving spatially interleaved data over two or more receive branches; and
deinterleaving said spatially interleaved data over space between said two or more receive branches.
